# EUROPÄISCHE PATENTSCHRIFT

(11) **EP 2 677 273 B1**
(45) Veröffentlichungstag und Bekanntmachung des Hinweises auf die Patenterteilung: **02.08.2017**
(21) Anmeldenummer: 13170408.2
(22) Anmeldetag: 04.06.2013
(51) Int. Cl.: G01B 11/10, A24C 5/34

(54) **Messvorrichtung und Verfahren zur optischen Prüfung einer Stirnfläche eines queraxial geförderten stabförmigen Produkts der Tabak verarbeitenden Industrie**
Measuring device and method for optically examining a front surface of a transversally conveyed rod-shaped product of the tobacco processing industry
Dispositif de mesure et procédé de contrôle optique d'une surface frontale d'un produit en forme de tige de l'industrie de traitement du tabac acheminé dans le sens transversal-axial

(30) Priorität: 14.06.2012 DE 102012210037
(43) Veröffentlichungstag der Anmeldung: 25.12.2013
(73) Patentinhaber: Hauni Maschinenbau GmbH, 21033 Hamburg (DE)
(72) Erfinder: Gast, Hanno, 21077 Hamburg (DE); Straube, Peter, 21035 Hamburg (DE)
(74) Vertreter: Müller Verweyen

(56) Entgegenhaltungen:
- EP-A1- 0 370 231
- EP-A1- 1 176 092
- EP-A2- 0 634 112
- DE-A1- 19 921 725

## Beschreibung

Die Erfindung betrifft eine Messvorrichtung zur optischen Prüfung einer Stirnfläche eines queraxial geförderten stabförmigen Produkts der Tabak verarbeitenden Industrie, umfassend eine optische Sensoranordnung, die zur Aufnahme eines Bildes einer Stirnfläche eines stabförmigen Produkts eingerichtet ist, und eine elektronische Signalverarbeitungseinrichtung zur Auswertung des von der Sensoranordnung ausgegebenen Messsignals. Die Erfindung betrifft zudem ein Verfahren zur optischen Prüfung einer Stirnfläche eines queraxial geförderten stabförmigen Produkts der Tabak verarbeitenden Industrie.

Entsprechend eines vorangegangenen Schneidevorgangs wird die Stirnfläche nachfolgend auch als Schnittfläche bezeichnet.

Die Qualitätsüberprüfung des Filterendes einer Zigarette oder der Stirnflächen von Filterstäben wird bisher an Maschinen der Tabak verarbeitenden Industrie, insbesondere Produktionsmaschinen oder Produktspeichern, nicht durchgeführt. Daher können Fehler, die in diesem Bereich auftreten, nicht detektiert werden. Generell wird lediglich das Brandende nur auf Kopfausfall, jedoch nicht umfassender überprüft. Um die Qualität von Filterende und Brandende zu ermitteln, werden herkömmlich Off-line-Messsysteme verwendet. Dadurch können jedoch nur geringe Stichproben untersucht werden.

Des weiteren ist bisher kein System verfügbar, mit dem die Stirnfläche eines Zigarettenfilters auf optische Fehler und/oder Qualitätsparameter und/oder geometrische Fehler hin überprüft werden kann. Dies betrifft herkömmliche Acetatfilter, jedoch insbesondere auch neuartige Filtertypen, wie beispielsweise Multifilter, CPA/CPF-Filter, Filter mit Faden, Filter mit Mustern, Kapselfilter, speziell geformte Filter, Rezessfilter etc.

Die EP 0 585 686 B1 offenbart eine optische Vorrichtung zur Überprüfung der Füllung von Zigaretten, die eine die Stirnfläche einer Zigarette beleuchtende Lichtquelle, eine fokussierende Linse mit festem Fokus und einen Detektor aufweist. Die Fokusebene der Linse ist auf eine Endkante der Zigarette gerichtet. Der Sensor ist zur Ermittlung des Kontrastes des von der Linse auf den Sensor fokussierten Bildes der Zigarettenstirnfläche eingerichtet. Bei optimal gefüllter Zigarette ist der detektierte Kontrast maximal. Wenn das Kontrastsignal unter eine vorbestimmte Schwelle fällt, wird ein Ausschusssignal ausgegeben.

Eine ähnliche Prüfvorrichtung dieser Art ist aus der EP 0 630 586 B2 bekannt. In einer Ausführungsform umfasst die optische Vorrichtung zwei fokussierende Linsen mit unterschiedlichem festem Fokus und zwei entsprechenden Detektoren, wobei die Fokusebenen relativ zu der Endkante der Zigarette versetzt sind. Das von der Stirnfläche einer Zigarette reflektierte Licht wird mittels eines halbdurchlässigen Spiegels und der beiden Linsen auf beide Detektoren fokussiert. Die Signale der beiden Detektoren werden einem Differenzglied zugeführt. Wenn die Differenz der beiden Signale einen vorgegebenen Wert überschreitet, wird ein Ausschusssignal ausgegeben. In einer weiteren Ausführungsform wird die Endkante einer Zigarette miterfasst und die gemessene Helligkeitskurve wird mit einer gespeicherten Soll-Helligkeitskurve verglichen. Das Ausgangssignal dieses Vergleichs ist ein Maß für eine axiale Verschiebung der Zigarette und gestattet eine entsprechende Kompensation der Messung.

Eine weitere Prüfvorrichtung ist aus der EP 0 843 974 B1 bekannt, wobei eine optische Faser zum Leiten von Licht aus einer Lichtquelle zu der Stirnseite einer Zigarette und zwei optische Fasern zum Detektieren von zwei Teilflächen der Stirnseite der Zigarette reflektiertem Licht vorgesehen sind.

Eine auf Bildverarbeitung beruhende optische Vorrichtung zur Prüfung der Enden von in Schragen gestapelten Zigaretten in einem Massenstrom ist aus der DE 39 20 888 C2 bekannt.

Aus der EP 1 099 388 A2 ist ein Off-Line-Prüfapparat zum Detektieren des Vorhandenseins von Tabak am Brandende einer Zigarette auf der Grundlage einer Infrarot-Transmissionsmessung bekannt. Auf einer Trommel werden Zigaretten an einer Tabakdetektionseinrichtung mit einer Infrarotquelle vorbeigeführt, die einen axial in die Zigarette an deren Brandende gerichteten Infrarotstrahl emittiert. Die radial aus der Zigarette austretende Infrarotstrahlung wird von vier um den Umfang der Zigarette angeordneten Infrarotdetektoren aufgenommen. Sofern die Intensität der durch das Brandende der Zigarette transmittierten Infrarotstrahlung einen voreingestellten Schwellwert nicht überschreitet, wird die Zigarette als akzeptabel eingestuft.

DE 197 53 333 A1 offenbart ein Verfahren zur Kontrolle der Vollzähligkeit von Zigarettengruppen und der Befüllung der Zigaretten mittels einer CCD-Zeilenkamera.

Sämtliche der vorstehend beschriebenen Messvorrichtungen beruhen auf einer Messung der Intensität der von der Stirnseite des stabförmigen Produkts reflektierten oder durch die Stirnseite des stabförmigen Produkts durchtretenden Strahlung. Diese Verfahren sind ungenau und liefern keine differenzierten quantitativen Werte, sondern nur eine binäre Aussage dahingehend, ob das untersuchte Produkt den Qualitätsanforderungen genügt oder nicht.

EP 0 704 172 B1 offenbart eine Vorrichtung zum Inspizieren eines kreisförmigen Objekts, insbesondere der Stirnseite eines stabförmigen Produkts, für eine Maschine der Tabak verarbeitenden Industrie, mittels einer auf das Objekt fokussierten Kamera, wobei fehlerhafte Objekte wie abstehender Papierrand (flag), Lücke zwischen Fasermaterial und Papier (bypass) oder verfärbte Regionen bzw. Flecken mittels Bildverarbeitung identifiziert werden.

Gemäß der EP 1 053 942 B1 wird der Lichtstrahl eines Lasers über eine Linse aufgeweitet und mittels einer Blende ein strukturiertes flächiges Lichtmuster erzeugt, das auf einen Zigarettenkopf fokussiert wird. Eine Linse fokussiert das reflektierte Licht auf einen positionsempfindlichen Detektor. Vom Detektor empfangenes reflektiertes Licht ist in einem von Null verschiedenen Winkel zum bestrahlenden Licht angeordnet. Die Blende umfasst eine größere Öffnung zur Ausleuchtung eines zentralen Bereichs einer Stirnfläche eines Zigarettenkopfs und einen konzentrisch um die größere Öffnung angeordneten Kranz von kleineren Öffnungen zum Beleuchten der Stirnseite des Zigarettenpapiers. Aus einer Verschiebung des von der größeren Öffnung erzeugten Lichtflecks auf dem Detektor relativ zu dem Kranz aus von der kleineren Öffnungen erzeugten Lichtpunkten kann beispielsweise auf eine fehlende Tabakfüllung am Zigarettenkopf geschlossen werden, was zum Auswurf der Zigarette führt. Bei einem Formatwechsel muss je nach Zigarettendurchmesser die Blende ausgewechselt werden, was umständlich und fehleranfällig ist. Zudem kann schon eine geringe Fehlpositionierung des eingestrahlten Lichtmusters relativ zu dem Zigarettenkopf zu einem falschen Messergebnis führen, was entweder den Ausschuss fehlerfreier Zigaretten oder die Akzeptanz fehlerhafter Zigaretten bedeutet.

Eine ähnliche Prüfvorrichtung ist aus der DE 199 21 725 A1 bekannt. Hier wird jeder Zigarettenkopf mit einem aus parallelen Streifen gebildeten, die zu untersuchende Stirnfläche teilweise ausleuchtenden Lichtmuster bestrahlt. Zur Erzeugung dieses Lichtmusters ist ein Linsen-Blenden-System vorgesehen, welches die beiden einlaufenden Lichtstrahlen in jeweils drei Lichtbänder umformt. Das Linsen-Blenden-System ist aufwändig und muss genau relativ zu den Zigarettenköpfen positioniert werden.

Aus der EP 0 634 112 A2 ist eine Vorrichtung zur optischen Prüfung der Füllung von Zigaretten bekannt, die eine Laserquelle zur Erzeugung eines kohärenten Lichtstrahls, eine Fokussierlinse und eine zylindrische Linse zum Umwandeln des Lichtstrahls in einen kohärenten Lichtfächer umfasst, der auf die zu untersuchende Stirnfläche der Zigarette gerichtet ist und dort eine linienförmige Lichtspur erzeugt. Ein Bild der Lichtspur wird mittels einer optischen Detektionseinheit aufgenommen. Ein Prozessor berechnet die Abweichung der gemessenen Lichtspur von einer idealen Referenzspur, nämlich einer geraden Linie von Papierkante zu Papierkante, und gibt ein Ausschusssignal aus, wenn die Abweichung außerhalb eines Toleranzbereichs liegt. In einer Ausführungsform wird der Lichtstrahl mittels eines Strahlteilers in eine Mehrzahl von parallelen Lichtfächern zur Erzeugung einer Mehrzahl von linienförmigen Lichtspuren geteilt.

Die Aufgabe der Erfindung besteht darin, eine Vorrichtung und ein Verfahren anzugeben, die mit geringem Aufwand genaue quantitative Werte bereitstellen, um eine detaillierte und umfassende Bewertung der Qualität einer Stirn- bzw. Schnittfläche eines quergeförderten stabförmigen Produkts zu ermöglichen.

Die Erfindung löst die obige Aufgabe mit den Merkmalen der unabhängigen Ansprüche. Die dreidimensionale Vermessung des Oberflächenprofils ermöglicht die quantitative Ermittlung von Abständen bzw. Entfernungen der gemessenen Stirnfläche in axialer Richtung. Auf diese Weise kann ein quantitatives Oberflächenprofil mit Tiefeninformation der gesamten Stirnfläche des stabförmigen Produkts mit einer Vielzahl von Datenpunkten erhalten werden, was äußerst detaillierte Aussagen über die Qualität der untersuchten Stirnfläche ermöglicht.

Zusätzlich zu der durch die dreidimensionale Vermessung erhaltene Tiefeninformation wird erfindungsgemäß ein Farb-/Graustufen-/Schwarzweiß-Bild der Stirnfläche aufgenommen, um Qualitätsinformation zu erhalten, die nicht in der Tiefeninformation enthalten ist, wie beispielsweise Verfärbungen, (Bild-)Muster, farbige Elemente etc. Insgesamt wird somit durch die erfindungsgemäße Kombination der dreidimensionalen Profilmessung mit zweidimensionaler Bildaufnahme eine universelle Messvorrichtung erzielt, die ein Maximum an Messinformation zur Verfügung stellt und somit eine umfassende Bewertung der untersuchten Schnittfläche ermöglicht. Es ist im Rahmen der Erfindung auch möglich, je nach Anforderung die erfindungsgemäße Messvorrichtung ausschließlich zur Aufnahme von 2D-Bildern oder ausschließlich zur Aufnahme eines 3D-Oberflächenprofils zu betreiben.

Die Erfindung kann vorteilhaft für die Untersuchung des Filterkopfes und/oder Brandendes einer Zigarette, der Schnittflächen von Filterstäben oder von Tabakstöcken verwendet werden.

Zur Bewertung der Qualität der Stirn- bzw. Schnittfläche ist die Signalverarbeitungseinrichtung vorzugsweise zur Ermittlung des Winkels der Stirnfläche und/oder des positiven / negativen Überstands von Fasern relativ zu der Stirnfläche eingerichtet. Durch diese Bewertung ist es möglich, unterschiedliche Stirnflächen reproduzierbar und quantitativ miteinander zu vergleichen und so beispielsweise Maßnahmen zur Optimierung zu bewerten oder Kriterien für eine Endabnahme nachzuweisen. Erfindungsgemäß können Stirnflächen und insbesondere Schnittflächen auch ohne Referenzproben nach einem einheitlichen Standard bewertet werden.

Die Erfindung ist insbesondere für die Bewertung der Winkeligkeit der Stirnflächen von Filterstäben vorteilhaft. Andere Anwendungen betreffen beispielsweise die Stirnflächenbewertung von Tabakstöcken oder Zigaretten.

Der Winkel der Stirnfläche wird vorzugsweise als Neigung einer an das Oberflächenprofil des stabförmigen Produkts angepassten Ebene bestimmt. Die Ebene wird dabei an einen Teil oder das gesamte Oberflächenprofil eines Füllmaterials des stabförmigen Produkts, oder an das gesamte Oberflächenprofil des stabförmigen Produkts, angepasst. Die Berücksichtung des Füllmaterials ist gegenüber einer Winkelbestimmung, die im Wesentlichen oder nur auf der Ermittlung der Stirnkante eines Hüllmaterials des stabförmigen Produkts beruht, bevorzugt, da es aufgrund der Messfehler am Rand und der begrenzten Auflösung des Sensors schwierig ist, das Hüllmaterial vom Füllmaterial zu unterscheiden.

Die Ermittlung des positiven / negativen Überstands von einzelnen Fasern des Füllmaterials relativ zu der Stirnfläche erlaubt wesentlich genauere Aussagen über die Qualität der Stirnfläche als bisher.

Besonders vorteilhaft ist die Anwendung der Erfindung auf eine online-Messvorrichtung an einer Maschine der Tabak verarbeitenden Industrie. Dies ermöglicht eine hochgenaue online-Qualitätsüberprüfung von Schnittflächen des Zigaretten-Filterkopfes oder von Filterstäben an der Maschine, und vorteilhaft eine entsprechende Reaktion der Maschinensteuerung im Produktionsablauf, beispielsweise Auswurf als fehlerhaft erkannter Produkte, oder eine Regelung der Maschine. Des Weiteren können aus der ermittelten Schnittflächenqualität Maschineneinstellungen und der Zustand von Maschinenteilen, insbesondere von Verschleißteilen wie beispielsweise Schneidwerkzeugen, ermittelt werden.

Die Erfindung ist vorteilhaft anwendbar auf eine Produktionsmaschine, insbesondere eine Filteransetzmaschine oder eine Filterstab-Herstellmaschine. Die Messvorrichtung ist insoweit vorzugsweise an einer Trommel einer Produktionsmaschine, insbesondere in Bezug zu einer Stirnseite einer Trommel, angeordnet. Andere vorteilhafte Anwendungen betreffen eine Messung an einem zusammenhängenden Massenstrom von stabförmigen Produkten, beispielsweise in einem Magazin, Speicher oder Reservoir für stabförmige Produkte, wie einem Filterstabmagazin oder einem Zigarettenspeicher, oder an einem Stackformer. Auch die Messung an einem vereinzelten Massenstrom, beispielsweise in einem Packermagazin oder einem Packer-Blockbilder, ist denkbar.

Zur dreidimensionalen Vermessung des Oberflächenprofils sind verschiedene Sensoren geeignet. Vorzugsweise ist der Sensor ein optischer Wegmesssensor, der zur Überstreichung der gesamten zu untersuchenden Stirnfläche des stabförmigen Produkts eingerichtet ist. Die bevorzugte Verwendung eines Triangulationssensors, d.h. eines auf Triangulation beruhenden Wegmesssensors ermöglicht die quantitative Ermittlung von Abständen der gemessenen Stirnfläche in axialer Richtung.

Die Erzeugung von zweidimensionalen Bilddaten kann hier vorteilhaft mittels eines bildgebenden Triangulationssensors erreicht werden. Der Detektor des Triangulationssensors ist hierbei zur Erfassung und Ausgabe der Intensität und/oder Wellenlänge der von der zu untersuchenden Stirnfläche reflektierten Strahlung eingerichtet. Die Abbildung beruht darauf, dass sich die Intensität und/oder Wellenlänge der reflektierten Strahlung je nach Farbe bzw. Helligkeit der untersuchten Stirnfläche ändert.

Alternativ kann ein Triangulationssensor zur Erzeugung des 3D-Oberflächenprofils mit einer 2D-Digitalkamera (Schwarzweiß-, Infrarot- oder Farbkamera) zur Aufnahme eines Bildes der Stirnfläche kombiniert werden.

Insbesondere in Verbindung mit einer Digitalkamera und/oder für 2D-Aufnahmen ist vorteilhafterweise eine geeignete, insbesondere variable Beleuchtungseinrichtung zur Beleuchtung der Stirnfläche des stabförmigen Artikels vorgesehen. Die Beleuchtungseinrichtung ist vorzugsweise eine LED-Beleuchtungseinrichtung, insbesondere unter Verwendung einer oder mehrerer RGB-, IR-, UV-, blauen, roten und/oder grünen LEDs. Die Beleuchtung kann als Dauerlicht oder Blitzlicht zur Belichtung ausgeführt sein. Neben einer LED-Weißlichtbeleuchtung können auf das aufzunehmende Objekt und/oder Prüfkriterium umschaltbare Farbleuchtdioden, Infrarot- oder Ultraviolettleuchtmittel vorgesehen sein. Die Beleuchtungseinrichtung kann als Ringlicht, Auflicht oder seitliche Beleuchtung ausgeführt sein. Eine Beleuchtungseinrichtung mit wählbarer Wellenlänge bzw. einem wählbaren Wellenlängenbereich kann vorteilhaft sein, beispielsweise um Kontraste von Filter-Applikationen zu erhöhen, oder mit dem menschlichen Auge nicht oder kaum wahrnehmbare Materialbestandteile sichtbar zu machen. Vorzugsweise kann die Beleuchtungseinrichtung vom nahe Infrarot bis zum nahen UV-Bereich einstellbar sein. Eine entsprechende Steuerung könnte entsprechend dem zu untersuchenden Objekt und Kriterium eine Wellenlänge bzw. einen Wellenlängenbereich, insbesondere UV-Licht, IR-Licht, Weißlicht, Rotlicht, Blaulicht oder Grünlicht wählen.

Alternativ zu einem Triangulationssensor kann beispielsweise ein Streifenprojektionsverfahren zur Erfassung des dreidimensionalen Oberflächenprofils angewendet werden.

Die Erfindung ist nicht auf einen Triangulationssensor beschränkt. Die Sensoranordnung kann beispielsweise alternativ ein 3D-fähiges bzw. stereoskopisches Kamerasystem umfassen. Ein 3D-fähiges Kamerasystem kann insbesondere durch Stereokameras, d.h. durch koordinierte Kombination zweier 2D-Kameras, realisiert werden. Ein 3D-fähiges Kamerasystem hat den Vorteil, dass 2D-Bildinformation und 3D-Oberflächenprofil in den gemessenen Daten vorliegen. Alternativ zu einem 3D-fähigen Kamerasystem ist beispielsweise auch die Verwendung einer plenoptischen Kamera, auch Lichtfeldkamera genannt, denkbar.

Besonders vorteilhaft sind für die kombinierte Auswertung von Tiefeninformation und Farbinformation 2D/3D umschaltbare Kameras oder solche Kameras, die Tiefeninformation und Farbinformation simultan liefern.

Die erfindungsgemäß gemessene optische 2D-/3D-Information wird vorteilhaft auf unterschiedliche Kriterien hin ausgewertet. Aufgrund der ausgewerteten Kriterien können Fehler auf der untersuchten Stirnfläche erkannt und Aussagen über die Qualität der untersuchten Stirnfläche getroffen werden. Die ausgewerteten Kriterien umfassen vorzugsweise eines oder mehrere der folgenden Kriterien: Im Falle eines Bildmusters auf dem Produkt: Mustererkennung, insbesondere Erkennung einer zerstörten Musterform, falschen Musterform und/oder falschen Musterfarbe. Verschmutzungserkennung, insbesondere Fleckenerkennung und/oder Krümelerkennung. Materialbewertung, insbesondere Bewertung der Homogenität und/oder des Farbwerts. Geometriebewertung, insbesondere Bewertung des Durchmessers, der Ovalität und/oder der Tiefe einer Aussparung. Produktionsfehlererkennung, insbesondere Erkennung von Kopfausfall, zu schmalem und/oder ausgefallenem Filterendstück und/oder zerschnittener Kapsel am Filterende. Die ermittelten Kriterien können abschließend zu einem oder mehreren Ergebnissen, insbesondere einer oder mehreren Qualitätszahlen, zusammengeführt und gegebenenfalls an die Maschinensteuerung weitergeleitet werden. In der Maschinensteuerung werden aufgrund der Bewertungskriterien unterschiedliche Aktionen ausgeführt, beispielsweise der Auswurf eines fehlerhaften Produkts, eine Regelung des Produktionsprozesses oder Anzeige eines auszuwechselnden Verschleißteils.

Beispielhaft sind nachfolgend verschiedene Produktionsprozesse beschrieben, bei welchen sich die erfindungsgemäße Messvorrichtung besonders vorteilhaft nutzen lässt, wobei diese Aufzählung nicht abschließend ist.

In den Zigaretten- und Filterstab-Herstellungsmaschinen sind jeweils mindestens eine Schneideinrichtung mit wenigstens einem Schneidwerkzeug vorgesehen, um beispielsweise den fortlaufend kontinuierlich geförderten Tabakstrang oder Filterstrang in Tabakstöcke doppelter Gebrauchslänge bzw. Filterstäbe in mehrfacher Gebrauchslänge zu schneiden. An einer Filteransetzmaschine werden die vorgenannten Zwischenprodukte auf letztlich einfache Gebrauchslänge geschnitten. Die hierfür vorgesehenen Schneidwerkzeuge unterliegen einem Verschleiß, mit der Folge einer über die Zeit zunehmend schlechter werdenden Schnittqualität.

Mit der erfindungsgemäßen Vorrichtung ist es nun erstmalig gelungen, die Schnittqualität online, das heißt im laufenden Betrieb festzustellen, eine Verschleißtendenz für jede Messerqualität in Verbindung mit Produktart zu speichern und bei Bedarf zur Anzeige zu bringen und/oder anderweitig statistisch auszuwerten. Bei Erreichen eines zuvor festgelegten und in der Maschinensteuerung hinterlegten Grenzwertes kann nunmehr erstmalig ein manueller oder automatischer Wechsel oder ein Nachführen des Schneidwerkzeugs ausgelöst werden. Dadurch, dass die Schneidwerkzeuge nicht einfach turnusmäßig gewechselt, geschärft oder nachgeführt werden, erhöht sich zum einen die genutzte Zeit, womit eine Senkung der Ersatzteilkosten verbunden ist. Zum anderen wird eine definierte Schnittqualität sichergestellt, da das Schneidwerkzeug nicht über seine Grenze hinaus genutzt wird.

Im Zuge der Verbreitung neuartiger Filter werden während der Herstellung des Filtertowstrangs und nachfolgend der Filterstäbe auf einer Filterstab-Herstellungsmaschine beispielsweise eingefärbte Fasern verarbeitet oder wenigstens eine farbige Flüssigkeit dem Faserstrang zugeführt. Hierbei ist es ein erklärtes Ziel, auf der Stirnfläche des Filterstabs ein ggf. mehrfarbiges Bild, beispielsweise in Form eines Rings, eines Markenlogos, eines Yin-Yang-Zeichens oder Nationalfarben, aufzubringen, wobei die genannten oder andere Symbole auch reliefartig ausgebildet sein können.

Mit der erfindungsgemäßen Vorrichtung ist es nun erstmalig gelungen, eine bildliche Darstellung auf einer Stirnfläche eines Zigarettenfilters online, das heißt im laufenden Betrieb zu ermitteln, bei Bedarf zur Anzeige zu bringen und/oder anderweitig statistisch auszuwerten. Bei Abweichungen von einer Sollvorgabe kann nunmehr erstmalig ein Zusatzist- bzw. Korrekturwert für die regelbare Reckwalzenanordnung und/oder die Weichmacherzuführeinrichtung und/oder Farbzuführeinrichtung und/oder Fadenzuführeinrichtung und/oder die Granulatzuführeinrichtung bereitgestellt und zur Regelung herangezogen werden.

Je nach Anforderung kann kontinuierlich jedes einzelne Produkt aus einem Produktstrom, oder nur ein Teil sämtlicher Produkte untersucht werden, beispielsweise nach einem Markenwechsel.

In einer bevorzugten Ausführungsform umfasst die Sensoranordnung einen zweidimensionalen optischen Wegmesssensor, wobei die Strahlungsquelle zur Erzeugung eines Strahlungsfächers eingerichtet ist, um eine linienförmige Abtastung der Stirnfläche des stabförmigen Produkts durchzuführen, und wobei zur flächigen Abtastung der Stirnfläche des stabförmigen Produkts die Stirnseite des stabförmigen Produkts und der Wegmesssensor relativ zueinander bewegbar sind. Mittels eines zweidimensionalen optischen Wegmesssensors kann die Messdauer pro stabförmigem Produkt, und damit die Gesamtmessdauer, erheblich reduziert werden. In dieser Ausführungsform ist die Ausdehnung bzw. Breite des Strahlungsfächers am Ort der zu untersuchenden Stirnfläche vorzugsweise größer als der größte Durchmesser der zu untersuchenden Stirnfläche, so dass zur vollständigen Überstreichung der Stirnfläche eine Bewegung der Stirnfläche relativ zu dem Sensor in einer Richtung ausreichend ist. Diese Bewegung wird vorteilhaft durch die Queraxialförderung des Produkts mittels eines entsprechenden Queraxialförderers bewirkt, so dass eine Bewegung des Wegmesssensors entbehrlich ist.

Die Erfindung wird im Folgenden anhand bevorzugter Ausführungsformen unter Bezugnahme auf die beigefügten Figuren erläutert. Dabei zeigt:
- Fig. 1: ein schematisches Ablaufdiagramm eines erfindungsgemäßen Messverfahrens in einer Maschine der Tabak verarbeitenden Industrie;
- Fig. 2, 3: mantel- und stirnseitige Ansicht einer erfindungsgemäßen Messvorrichtung an einer Trommel;
- Fig. 4, 5: Draufsicht und stirnseitige Ansicht einer erfindungsgemäßen Messvorrichtung an einem zusammenhängenden Massenstrom;
- Fig. 6, 7: Draufsicht und stirnseitige Ansicht einer erfindungsgemäßen Messvorrichtung an einem vereinzelten Massenstrom;
- Fig. 8: eine schematische Ansicht einer erfindungsgemäßen Messvorrichtung mit einem Triangulationssensor;
- Fig. 9: eine Draufsicht auf eine zu untersuchende Stirnseite eines Produkts zur Illustration des Abtastvorgangs für den Triangulationssensor aus Figur 8;
- Fig. 10: ein schematisches Messdiagramm für ein stabförmiges Produkt;
- Fig. 11: ein gemessenes dreidimensionales Profil der Stirnseite eines Filterstabes;
- Fig. 12: ein gemessenes dreidimensionales Bild der Stirnseite eines Tubefilters;
- Fig. 13: ein schematisches Messdiagramm für ein stabförmiges Produkt mit einem Schiefschnitt; und
- Fig. 14-16: schematische Darstellungen verschiedener zu ermittelnder Qualitätskriterien.

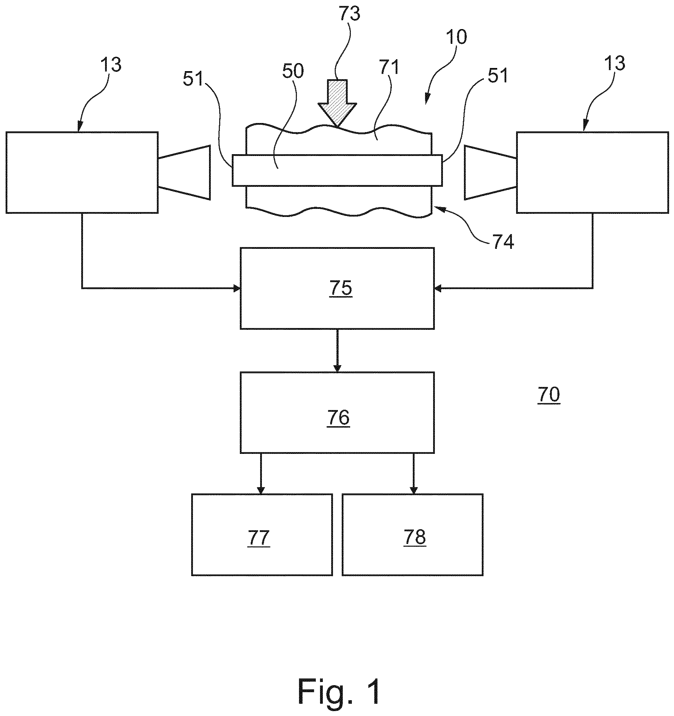

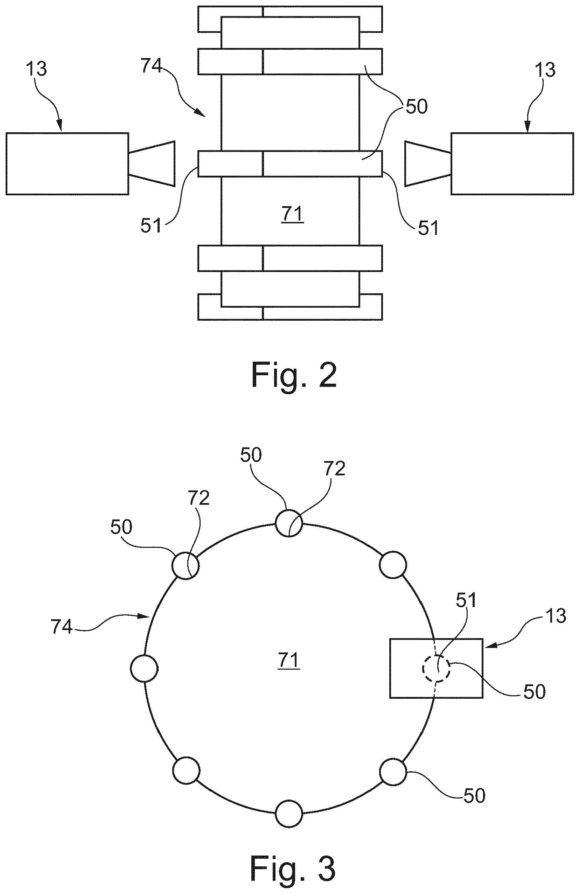

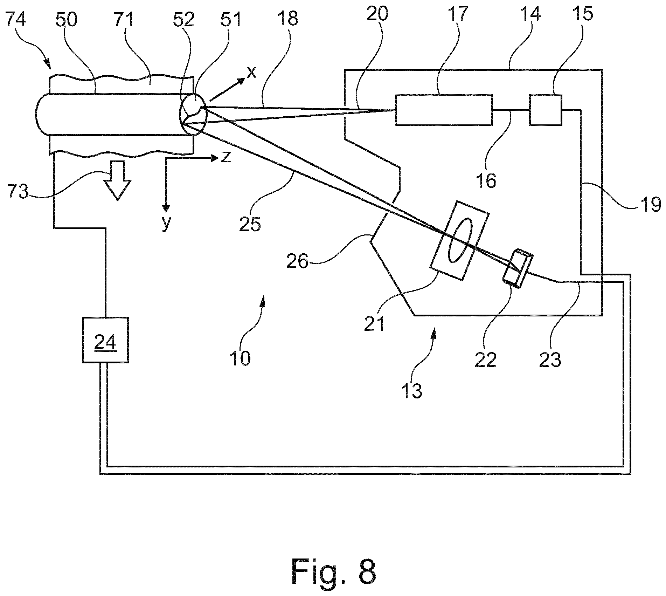

Die Messvorrichtung 10 umfasst in den Ausführungsformen gemäß Figuren 1 bis 7 zwei Sensoranordnungen 13 zur optischen Prüfung beider Stirnflächen 51 eines stabförmigen Produkts 50 der Tabak verarbeitenden Industrie. Die Sensoranordnungen 13 können hier vorzugsweise identisch aufgebaut sein. Je nach Anforderung kann auch nur eine Sensoranordnung 13 zur Inspektion nur einer der beiden Stirnseiten 51 vorgesehen sein, siehe beispielsweise Figur 8. Das stabförmige Produkt 50 kann beispielsweise ein Filterstab, eine Zigarette oder ein Tabakstock, auch in doppellanger Form, sein.

Die Ausführungsformen gemäß den Figuren 1 bis 3 und 8 betreffen eine bevorzugte Anwendung der Messvorrichtung 10 in einer Produktionsmaschine 70 der Tabak verarbeitenden Industrie, insbesondere einer Filteransetzmaschine, einer Filterstab-Herstellmaschine oder einer Multisegmentfilterherstellungsmaschine. In der Produktionsmaschine 70 werden die stabförmigen Produkte 50 einzeln gehandhabt und insbesondere auf Trommeln 71 beispielsweise in entsprechenden Mulden 72 mittels Saugdruck gehalten und durch Rotation der Trommel 71 gefördert. Die Förderrichtung 73 ist in den Figuren 1 bis 8 beispielhaft mittels eines Pfeils bezeichnet. In sämtlichen Fällen handelt es sich um eine Queraxialförderung, d.h. die Förderrichtung 73 ist etwa senkrecht zu der Achse des stabförmigen Produkts 50 gerichtet. Die Queraxialförderung erfolgt mittels eines entsprechenden Queraxialförderers 74. Im Falle der Produktionsmaschine 70 gemäß den Figuren 1 bis 3 und 8 wird der Queraxialförderer 74 von einer Trommel 71 gebildet.

Die Sensoranordnung 13 ist benachbart zur Stirnseite der Trommel 71 zur Inspektion der Stirnfläche 51 des stabförmigen Produkts 50 angeordnet. Die Sensoranordnung 13 ist zur Aufnahme eines zweidimensionalen Bildes und/oder zur dreidimensionalen Vermessung des Oberflächenprofils der Stirnfläche 51 eingerichtet. Die Sensoranordnung 13 ist beispielsweise eine 3D-fähige Kamera, ein bildgebender Triangulationssensor (diese Variante wird weiter unten anhand von Figur 8 erläutert) oder eine Kombination aus einem Triangulationssensor mit einer 2D-Kamera.

Die von der oder den Sensoranordnungen 13 aufgenommene optische Information wird an eine Signalverarbeitungs- und Steuereinrichtung 24 (siehe Figur 8) zur Steuerung der Messvorrichtung 10 und zur Auswertung der von der Sensoranordnung 13 aufgenommenen Messsignale übermittelt. Die Signalverarbeitungs-und Steuereinrichtung 24 kann daher auch als Auswerteeinheit 75 bezeichnet werden. Die Auswertung in der Auswerteeinheit 75 soll es ermöglichen, Fehler auf der untersuchten Stirnfläche 51 zu erkennen und Qualitätsmerkmale der untersuchten Stirnfläche zu ermitteln, wobei die Stirnfläche auch entsprechend eines vorangegangenen Schneidvorgangs auch Schnittfläche genannt wird.

Es ist eine Vielzahl an Kriterien für die Bewertung denkbar. Die ausgewerteten Kriterien umfassen vorzugsweise eines oder mehrere der folgenden Kriterien: Im Falle eines Bildmusters auf dem Produkt: Mustererkennung, insbesondere Erkennung einer zerstörten Musterform, falschen Musterform und/oder falschen Musterfarbe. Verschmutzungserkennung, insbesondere Fleckenerkennung und/oder Krümelerkennung. Materialbewertung, insbesondere Bewertung der Homogenität und/oder des Farbwerts. Geometriebewertung, insbesondere Bewertung des Durchmessers, der Ovalität und/oder der Tiefe einer Aussparung. Produktionsfehlererkennung, insbesondere Erkennung von Kopfausfall, zu schmalem und/oder ausgefallenem Filterendstück und/oder zerschnittener Kapsel am Filterende.

Die ermittelten Kriterien können abschließend zu einem oder mehreren Ergebnissen, insbesondere Qualitätszahlen, zusammengeführt und gegebenenfalls an die Maschinensteuerung 76 weitergeleitet werden. Für die betrachteten Kriterien ist es vorteilhaft, jeweils einen vordefinierten Toleranzbereich zu verwenden, in dem die Schnittfläche als "gut" bzw. "fehlerfrei" angesehen wird.

In der Maschinensteuerung 76 können aufgrund der ermittelten Bewertungskriterien unterschiedliche Aktionen - je nach Fehlerart oder Fehlerklasse - ausgeführt werden, beispielsweise das Ausschleusen 77 eines fehlerhaften Produkts, Regelung 78 des Produktionsprozesses, und/oder Anzeige eines auszuwechselnden Verschleißteils, wie beispielsweise eines Schneidmessers.

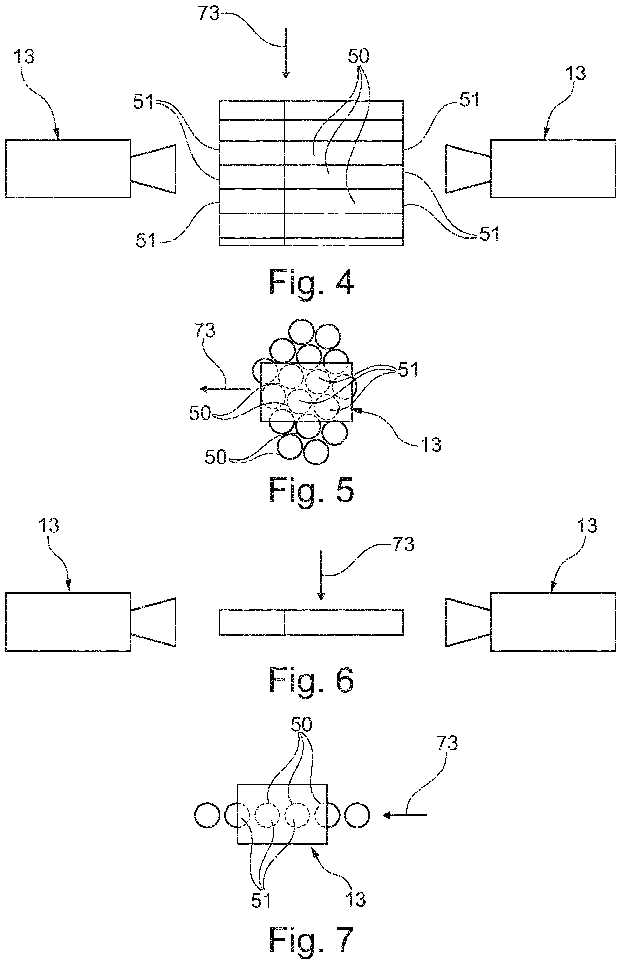

Die Figuren 4 und 5 (Ansicht von der Frontseite) betreffen die Messung an einem zusammenhängenden Massenstrom in einer Maschine der Tabak verarbeitenden Industrie, beispielsweise an einem Filterstabmagazin, einem Zigarettenspeicher oder einem Stackformer. Die Figuren 6 und 7 (Ansicht von der Frontseite) betreffen die Messung an einem vereinzelten Massenstrom in einer Maschine der Tabak verarbeitenden Industrie, beispielsweise an einem Packmaschinenmagazin oder einem Packmaschinenkammernband. Der in diesen Figuren nicht gezeigte Queraxialförderer kann beispielsweise ein Bandförderer insbesondere in Form eines Muldenbandes, Kettenförderer insbesondere in Form einer Tragförderkette oder dergleichen sein.

Eine bevorzugte Ausführungsform der Messvorrichtung 10 wird anhand von Figur 8 erläutert. Die optische Sensoranordnung 13 ist hier ein abbildender optischer Wegmess-Sensor 13. Die Signalverarbeitungs- und Steuereinrichtung 24 kann beispielsweise in der Maschinensteuerung 76 (siehe Figur 1) realisiert sein.

Der Sensor 13 gemäß Figur 8 ist wie folgt aufgebaut. In dem Sensorgehäuse 14 ist eine einen Lichtstrahl 16 erzeugende, über eine Leitung 19 versorgte Lichtquelle 15 vorgesehen. Die Lichtquelle 15 ist vorzugsweise eine Laserlichtquelle, insbesondere ein Halbleiterlaser, beispielsweise eine Laserdiode. Das Intensitätsmaximum liegt vorzugsweise im sichtbaren Bereich, aber auch Infrarotbereich ist denkbar. Vorzugsweise enthält der Sensor 13 ein Strahlaufweitungselement 17, insbesondere eine zylindrische Linse, zur Aufweitung des Lichtstrahls 16 in einen zweidimensionalen Lichtfächer 18. Der Lichtfächer 18 kann auch auf andere Weise erzeugt werden.

Der Lichtfächer 18 tritt durch ein Austrittsfenster 20 aus dem Sensor 13 aus und fällt auf die zu vermessende Oberfläche bzw. Schnittfläche, insbesondere die Stirnfläche 51 am Kopfende eines stabförmigen Produkts 50, und erzeugte dort eine Linie 52, nämlich die Schnittlinie der Ebene des Strahlfächers 18 mit der zu vermessenden Oberfläche 51. Das von der Oberfläche 51 reflektierte Licht wird sodann über ein in dem Gehäuse 14 vorgesehenes Eintrittsfenster 26 mittels eines in dem Sensor 13 enthaltenden, insbesondere zweidimensionalen Linsensystems bzw. Objektivs 21 auf dem Strahlungsdetektor 22 abgebildet, der insbesondere als zweidimensionaler Detektor bzw. Flächendetektor ausgebildet ist. Die mittels des Strahlungsdetektors 22 detektierte Bildinformation wird über eine Signalleitung 23 an die Signalverarbeitungseinrichtung- und Steuereinrichtung 24 ausgegeben.

Aufgrund des Winkels zwischen der einfallenden Strahlung (Strahlungsfächer 18) und der reflektierten Strahlung 25 kann der genaue longitudinale Abstand jedes Punktes auf der Linie 52 zu einem entsprechenden Referenzpunkt, und damit das genaue Profil der Linie 52 mittels Triangulation quantitativ bestimmt werden. Longitudinal bedeutet dabei entlang der Richtung der einfallenden Strahlung 18 (hier die z-Richtung), genauer entlang der Richtung der Mittelachse der einfallenden Strahlung 18, oder alternativ in Richtung der Längsachse des stabförmigen Produkts 50. Auf dem Strahlungsdetektor 22 wird daher die Form der Linie 52, und damit das Oberflächenprofil der Oberfläche 51 in dem betreffenden Querschnitt, in quantitativer Weise abgebildet.

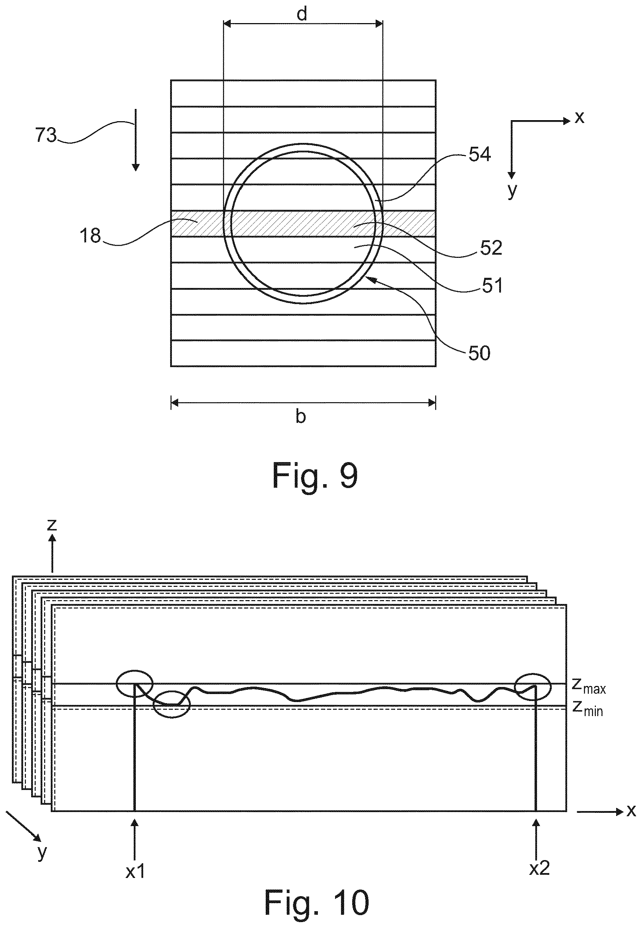

Der Sensor 13 ist vorzugsweise zur Erzielung einer Ortsauflösung von 0,1 mm oder darunter, vorzugsweise von 0,02 mm oder darunter, eingerichtet, so dass pro Messkurve (siehe Fig. 9) vorzugsweise mindestens 100, weiter vorzugsweise mindestens 500 Messpunkte zur Verfügung stehen. Ortsauflösungen deutlich unterhalb von 0.1 mm mit mehreren hundert Messpunkten pro Messkurve sind bei Bedarf problemlos erzielbar.

Der Winkel zwischen der einfallenden Strahlung (Strahlungsfächer 18) und der reflektierten Strahlung 25 liegt zwischen 20° und 70° und zur Erzielung einer höheren Genauigkeit vorzugsweise zwischen 30° und 60°.

Im Betrieb der Maschine 70 wird die Stirnfläche 51 am Kopfende der Zigarette 50 von dem Sensor vollständig abgetastet. Dies wird durch Bewegung der Stirnfläche 51 an dem Sensor 13 vorbei bewirkt, im Falle der Produktionsmaschine 70 gemäß den Figuren 1 bis 3, 8 durch Rotation der Trommel 71, im allgemeinen durch die Förderung mittels des Queraxialförderers 74. In kurzen Abständen wird eine Messkurve wie die beispielsweise in Fig. 10 gezeigte aufgenommen.

Die Abtastbewegung wird im Folgenden anhand der Fig. 9 genauer erläutert. Fig. 9 betrifft Ausführungsformen mit einem zweidimensionalen Wegmesssensor 13 mit einem Lichtfächer 18 wie in Fig. 8 gezeigt. In Fig. 9 ist der Lichtfächer 18 im Querschnitt am Ort der zu untersuchenden Stirnfläche 51 durch ein schraffiertes Rechteck illustriert. Die Ausdehnung b des Lichtfächers 18 am Ort der zu untersuchenden Stirnfläche 51 (siehe Fig. 9) ist vorteilhaft größer als der maximale Durchmesser d der zu untersuchenden Stirnfläche 51, insbesondere größer als 10 mm. Es reicht dann aus, wenn die zu untersuchende Stirnfläche 51 des Produkts 50 in der Förderrichtung 73 relativ zu dem Lichtfächer 18 bewegt wird, um die zu untersuchende Stirnfläche 51 einschließlich der Kante 54 des Umhüllungsstreifens vollständig zu überstreichen. In Fig. 9 sind zu diesem Zweck 11 Abtastpositionen gezeigt, wobei an jeder Abtastposition eine Messkurve aufgezeichnet wird. In der Praxis ist die Zahl der Abtastpositionen pro Produkt 50 je nach gewünschter Messauflösung in der Regel wesentlich höher. Nach dem zuvor Gesagten ist der Sensor 13 zum Überstreichen der gesamten Kante 54 des Umhüllungsstreifens eingerichtet. Die Abtastpositionen können sich auch überlappen.

Im Vordergrund der Fig. 10 ist ein Messdiagramm zu sehen, das die auf dem Strahlungsdetektor 22 detektierte Linie 52 in der z-Richtung über der x-Richtung (siehe Fig. 8) bei fester y-Position wiedergibt (entsprechend einer Abtastposition in Fig. 9). Aufgrund der geometrischen Bedingungen gibt die unregelmäßige Kurve in Fig. 10 das Oberflächenprofil der Oberfläche 51 in dem der Linie 52 entsprechen Querschnitt quantitativ exakt wieder (Triangulation). Die Werte am rechten und linken Rand der unregelmäßigen Kurve in Fig. 10 an den mit x1 und x2 bezeichneten Positionen entsprechen der Papierkante 54 bzw. allgemeiner der Kante des Hüllmaterials des stabförmigen Produkts 50. An diesen Positionen erreicht die Messkurve am Brandende von Zigaretten häufig den Maximalwert zmax. An der Stirnfläche eines Filterendes einer Zigarette oder eines Filterstabes dagegen erreicht die Messkurve häufig einen Minimalwert.

Die Stirnfläche 51 wird dann, wie zuvor beschrieben, relativ zu dem Sensor 13 infolge der Queraxialförderung des Produkts 50 kontinuierlich mit Produktgeschwindigkeit verschoben und nach jedem vordefinierten Wegabschnitt bzw. Winkelabschnitt oder Zeittakt wird eine separate Messkurve aufgenommen (jeweils entsprechend einer Abtastposition in Fig. 9). Dies wird in Fig. 10 durch fünf übereinandergelegte Messdiagrammen veranschaulicht, wobei in der Praxis die Zahl der pro stabförmigem Produkt 50 aufgenommenen Messkurven wesentlich bzw. um ein Vielfaches höher ist, um eine gewünschte hohe Messauflösung in der y-Richtung zu erzielen. Die Zahl der pro stabförmigem Produkt 50 aufgenommenen Messkurven (Zahl der Diagramme in Fig. 10) ist vorzugsweise so bemessen, dass sich eine einheitliche gewünschte Messauflösung in beiden Richtungen (x- und y-Richtung in Fig. 9) ergibt. Die Zahl der pro stabförmigem Produkt aufgenommenen Messkurven beträgt daher vorzugsweise mindestens 100, weiter vorzugsweise mindestens 500.

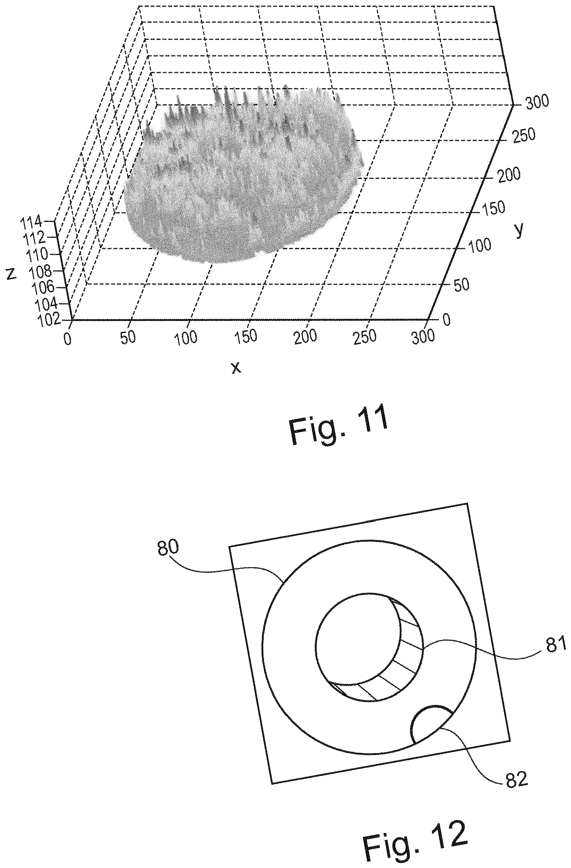

Auf die beschriebene Weise ergibt sich ein hochaufgelöstes, dreidimensionales Profil der gesamten stirnseitigen Oberfläche des stabförmigen Produkts. Beispielsweise ist in Fig. 11 ein gemessenes dreidimensionales Profil eines Filterstabes in einer perspektivischen Ansicht gezeigt. Profil bedeutet, dass für jeden Messwert in x- und y-Richtung der gemessene relative Abstand der Oberfläche 51 in longitudinaler Richtung (z-Wert) angegeben wird. Es handelt sich somit um ein topographisches Profil der Stirnseite 51 mit dreidimensionalen Daten, das im Folgenden auch als Tiefenprofil bezeichnet wird. Aufgrund der Erfindung steht somit eine äußerst detaillierte, quantitative und dreidimensionale Oberflächeninformation mit beispielsweise 10^3 bis 10^6 oder mehr Datenpunkten pro Messung zur Verfügung.

Ebenfalls gemessen wird die Bildinformation, d.h. die zweidimensionale Farb- bzw. Wellenlängeninformation der Stirnfläche 51. Farbinformation umfasst dabei ebenfalls Schwarzweiß-Abbildung oder Graustufenabbildung. Die Bildaufnahme kann in dem Ausführungsbeispiel gemäß Figur 8 durch einen entsprechend sensitiven Detektor 22 realisiert werden; der Triangulationssensor 13 ist in diesem Fall ein abbildender Triangulationssensor. Wie bereits erwähnt kann die Bildaufnahme beispielsweise auch mittels einer zusätzlichen 2D-Kamera oder alternativ mittels eines 3D-fähigen Kamerasystems 13, beispielsweise eines Stereokamerasystems, erfolgen.

Die in Figur 12 gezeigte Abbildung einer Schnittfläche 51 verdeutlicht den Vorteil der erfindungsgemäßen Sensoranordnung 13. Es handelt sich um die Abbildung der Stirnfläche 51 eines sogenannten Tubefilters 80, d.h. ein geformter Filter mit einer inneren Ausnehmung 81. Mithilfe des durch den Triangulationssensor 13 aufgenommenen Tiefenprofils der Stirnfläche 51 kann geprüft werden, ob die Tiefe der mittigen Aussparung 81 den Produktionsvorgaben entspricht. Aufgrund der erfindungsgemäß ebenfalls gemessenen 2D-Bildinformation kann der stirnseitig sichtbare Kohlepartikel 82, oder beispielsweise eine andere Verfärbung, ermittelt werden. Diese Fehlerfeststellung wäre mit einem einfachen Triangulationssensor 13 nicht möglich, weil sich das 3D-Oberflächenprofil durch eine Verfärbung nicht ändert.

Zusätzlich zu den bereits genannten Kriterien können beispielsweise der Winkel der Schnittfläche 51, der positive oder negative Überstand von Fasern des Füllmaterials des stabförmigen Produkts 50 über die Schnittfläche 51, ein Rauhigkeitskennwert der Schnittfläche 51 und/oder die Feststellung von Papierausrissen 61 oder Fransen 62 in dem Hüllmaterial 63 des stabförmigen Produkts 50 ermittelt werden. Eine Mehrzahl der zuvor beschriebenen Qualitätskriterien können in geeigneter Weise zu einer einheitlichen Qualitätszahl, oder zu einigen wenigen einheitlichen Qualitätszahlen, kombiniert werden. Dies kann beispielsweise für den Maschinenbediener übersichtlicher sein als eine Vielzahl von einzelnen Qualitätskriterien.

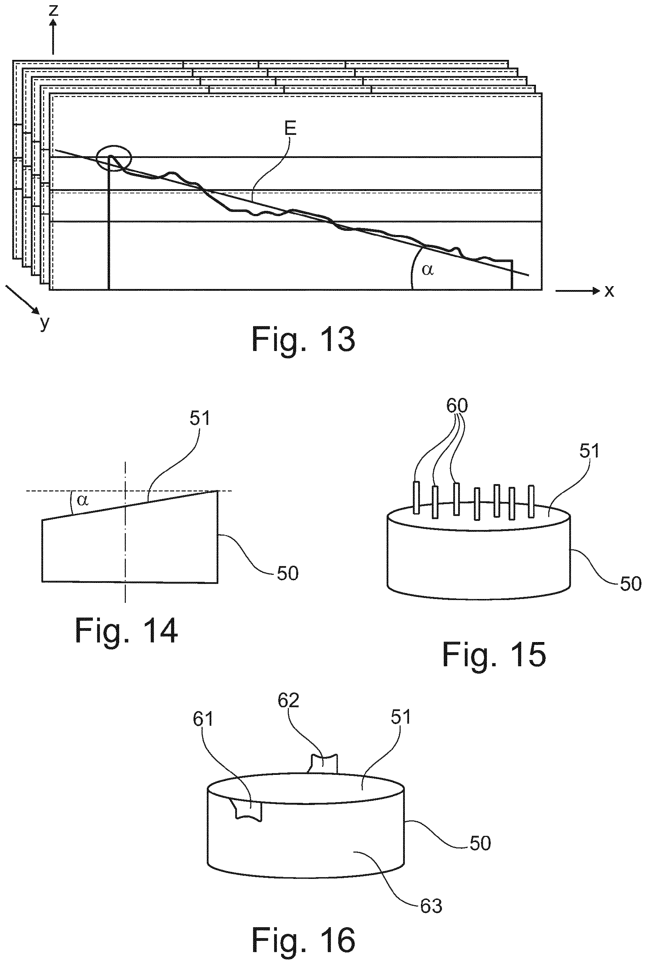

Wichtige Qualitätskriterien sind beispielsweise der Winkel α der Stirnfläche 51 (siehe Figur 14), der positive oder negative Überstand von Fasern 60 des Füllmaterials des stabförmigen Produkts 50 über die Stirnfläche 51 (siehe Figur 15) und/oder die Feststellung von Papierausrissen 61 oder Fransen 62 in dem Hüllmaterial 63 des stabförmigen Produkts 50 (siehe Figur 16). Ein Auswerteverfahren wird im Folgenden anhand eines Filterstabes 50 im Detail beschrieben. Dies kann auf die Bewertung einer Stirnfläche eines Tabakstocks oder einer Zigarette sinngemäß übertragen werden.

Bei der Auswertung muss grundsätzlich beachtet werden, dass unterschiedliche Filtertypen wie Acetatfilter, Aktivkohlefilter, Rezessfilter, Tube-Filter etc. möglich sind. Information über die verschiedenen Filtertypen und daran angepasste Auswerteverfahren sind vorzugsweise in der Auswerteeinheit 24 gespeichert.

An den Rändern der stabförmigen Produkte 50 weisen die 3D-Profile häufig systematische Messfehler auf. Dies kann unterschiedliche Ursachen haben, beispielsweise durchscheinende Lichtquelle am Rand oder nicht exakt zum Sensor 13 ausgerichtetes Produkts 50. Es kann daher vorteilhaft sein, den Rand des 3D-Profils in der Auswertung nicht zu berücksichtigen. In diesem Fall wird der Rand des 3D-Profils vorzugsweise einfach vor der weiteren Auswertung aus dem Datensatz entfernt.

Insbesondere bei bevorzugter Verwendung eines Triangulationssensors 13 können abgeschattete Bereiche entstehen, in denen keine Tiefeninformation bzw. 3D-Information aufgenommen werden kann. Dies tritt beispielsweise bei Aktivkohle-, Rezess- oder Tube-Filtern auf. Die abgeschatteten Bereiche werden vorzugsweise vor der weiteren Auswertung anhand der umgebenden Tiefeninformation bzw. 3D-Information interpoliert.

Zur Ermittlung des Winkels der Stirnfläche 51 (siehe Figur 14) wird in der Auswerteeinheit 24 eine Ebene E an das gesamte Tiefenprofil angepasst ("gefittet"), beispielsweise in der Weise, dass der quadratische Fehler (die Summe der quadratischen Abweichungen der Ebene E von dem Tiefenprofil) minimal wird, oder auf andere geeignete Weise. Die angepasste Ebene E ist in Figur 13 für ein Tiefenprofil einer Stirnfläche 51 mit einem erheblichen Schiefschnitt angedeutet. Der Winkel α der Stirnfläche ergibt sich als der Winkel zwischen der Ebene E und einer Sollebene, die in der Regel senkrecht zu der Längsachse des stabförmigen Produkts 50 orientiert ist. Im Falle einer Stirnfläche 51 mit guter Qualität beträgt der Winkel α etwa 0°, siehe beispielsweise Figur 10.

Die Berücksichtigung der gesamten oder eines erheblichen Teils der Stirnfläche 51 des stabförmigen Produkts 50 für die Bestimmung des Winkel α ist wesentlich genauer als die Betrachtung nur der Stirnkante des Umhüllungsstreifens (Papier), da es aufgrund der Messfehler am Rand problematisch ist, das Umhüllungsmaterial von dem Füllmaterial (Tow oder Tabak) zu unterscheiden.

Ein weiteres wichtiges Kriterium zur Bewertung der Stirnfläche 51 betrifft vorstehende bzw. zurückgezogene Fasern des Füllmaterials des stabförmigen Produkts 50 über die Sollebene. Im stark vereinfachten Beispiel der Figur 15 sind nur überstehende Fasern (positiver Überstand in z-Richtung) gezeigt. Der positive bzw. negative Überstand einzelner Fasern, insbesondere Acetat- oder Tabakfasern, wird vorzugsweise relativ zu der angepassten Ebene E (siehe Figur 13) bestimmt. Zu diesem Zweck kann beispielsweise die Ebene E von dem gemessenen Tiefenprofil subtrahiert werden. Eine für die Qualitätsbewertung relevante Größe kann beispielsweise die Standardabweichung des Faserüberstands oder eine vergleichbare statistische Größe sein, und/oder die Anzahl der Fasern, die einen vorbestimmten Toleranzbereich über- bzw. unterschreiten. Der Toleranzbereich sollte dabei so gewählt sein, dass bei einem fehlerfreien Produkt 50 keine oder nur tolerierbar wenige Fasern außerhalb des Toleranzbereichs vorhanden sind.

Auch für die anderen betrachteten Kriterien ist es vorteilhaft, jeweils einen vordefinierten Toleranzbereich zu verwenden, in dem die Stirnfläche als "gut" bzw. "fehlerfrei" angesehen wird.

Um ausgerissenes Papier 61 oder Fransen 62 zu erkennen, die radial nach außen wegstehen, wird vorzugsweise eine Ellipse an den Rand des der Auswertung zugrundegelegten Profils angepasst bzw. "gefittet". Anschließend wird die maximale Entfernung der Kontur des Objekts 50 zu der Ellipse ermittelt. Sind Papierausrisse oder Fransen vorhanden, ist diese Entfernung größer als im Falle eines fehlerfreien Produkts. Auf diese Weise kann ebenfalls eine Einkerbung radial nach innen erkannt werden. Papierausrisse und Fransen, die axial nach innen oder nach außen ragen, werden von der Bewertung auf vorstehende Fasern erkannt, da diese sich ähnlich in dem Profil abbilden.

Alternativ oder zusätzlich zu dem Kriterium der überstehenden Fasern kann ein Rauhigkeitskennwert als Qualitätskriterium bestimmt werden.

Zusätzlich zu den genannten und in den Figuren 14 bis 16 veranschaulichten Bewertungskriterien können weitere Kriterien aus dem gemessenen Tiefenprofil der Stirnfläche 51 ermittelt werden, insbesondere geometrische Größen des stabförmigen Produkts 50 wie beispielsweise Ovalität bzw. Exzentrizität, Umfang, Durchmesser, Fläche der Stirnseite etc. Dazu kann vorzugsweise die zuvor erwähnte, an den Rand des Tiefenprofils angepasste Ellipse verwendet werden. Die Ovalität der Stirnfläche 51 wird beispielsweise als Differenz zwischen dem maximalen Durchmesser dₘₐₓ und des minimalen Durchmessers dₘᵢₙ berechnet.

Anstelle des zweidimensionalen Triangulationssensors 13 gemäß Figur 8 ist alternativ die Verwendung eines eindimensionalen Wegmesssensors, der zur Erzeugung eines Lichtstrahls eingerichtet ist, nicht ausgeschlossen. In diesem Fall ist der eindimensionale Triangulationssensor 13 vorteilhaft in einer Richtung senkrecht zu der Förderrichtung 73 und senkrecht zu der Längsachse des Produkts 50 bewegbar, damit der entsprechende Lichtpunkt die gesamte Stirnfläche 51 des Produkts 50 überstreichen kann.

## Patentansprüche

1. Messvorrichtung (10) zur optischen Prüfung einer Stirnfläche (51) eines queraxial geförderten stabförmigen Produkts (50) der Tabak verarbeitenden Industrie, umfassend eine optische Sensoranordnung (13), die zur Aufnahme eines Bildes einer Stirnfläche (51) eines stabförmigen Produkts (50) eingerichtet ist, und eine elektronische Signalverarbeitungseinrichtung (24) zur Auswertung des von der Sensoranordnung (13) ausgegebenen Messsignals, wobei die Sensoranordnung (13) zur dreidimensionalen Vermessung des Oberflächenprofils der Stirnfläche (51) des stabförmigen Produkts (50) eingerichtet ist, **dadurch gekennzeichnet, dass** die Messvorrichtung zum Erhalten eines dreidimensionalen Oberflächenprofils der Stirnfläche (51) des stabförmigen Produkts (50) aus dem von der Sensoranordnung (13) ausgegebenen Messsignal, und die elektronische Signalverarbeitungseinrichtung (24) zum Auswerten des dreidimensionalen Oberflächenprofils der Stirnfläche (51) des stabförmigen Produkts (50) eingerichtet ist.

2. Vorrichtung nach Anspruch 1, **dadurch gekennzeichnet, dass** die Sensoranordnung (13) einen 3D-Sensor umfasst.

3. Vorrichtung nach Anspruch 2, **dadurch gekennzeichnet, dass** der 3D-Sensor ein bildgebender Triangulationssensor oder eine 3D-fähige Kamera ist.

4. Vorrichtung nach einem der vorangehenden Ansprüche, **dadurch gekennzeichnet, dass** die Sensoranordnung einen 2D-Sensor umfasst, welcher als Digitalkamera, insbesondere Farbdigitalkamera oder Infrarotdigitalkamera, ausgebildet ist.

5. Vorrichtung nach einem der vorangehenden Ansprüche, **dadurch gekennzeichnet, dass** die Sensoranordnung (13) einen optischen Wegmesssensor umfasst, der zur Überstreichung der zu untersuchenden Stirnfläche (51) des stabförmigen Produkts (50) eingerichtet ist.

6. Vorrichtung nach Anspruch 5, **dadurch gekennzeichnet, dass** der Wegmesssensor ein zweidimensionaler optischer Wegmesssensor ist, wobei die Strahlungsquelle (15, 17) zur Erzeugung eines Strahlungsfächers (18) eingerichtet ist, um eine linienförmige Abtastung (52) der Stirnfläche (51) des stabförmigen Produkts (50) durchzuführen.

7. Vorrichtung nach Anspruch 6, **dadurch gekennzeichnet, dass** die Ausdehnung b des Strahlungsfächers (18) am Ort der zu untersuchenden Stirnfläche (51) größer als 10 mm ist.

8. Maschine der Tabak verarbeitenden Industrie, umfassend mindestens einen Queraxialförderer (74) zur queraxialen Förderung eines Produktes (50) der Tabak verarbeitenden Industrie, wenigstens eine zu dem mindestens einen Queraxialförderer (74) stirnseitig benachbart angeordnete Messvorrichtung (13), eine Maschinensteuerung (76) und eine dem mindestens einen Queraxialförderer (74) in Förderrichtung (73) nachgeordnete Ausschleuseeinrichtung, wobei der Queraxialförderer (74) insbesondere als Trommel (71), Muldenband, Tragförderkette oder Kammernband ausgebildet ist, **dadurch gekennzeichnet, dass** die Messvorrichtung (13) nach einem der Ansprüche 1 bis 7 ausgebildet ist und die Maschinensteuerung (76), der Queraxialförderer (74), die Messvorrichtung (13) und die Ausschleuseeinrichtung in elektrischer Wirkverbindung stehen, um anhand einer Auswertung der Messsignale der Sensoranordnung als fehlerhaft erkannte Produkte auszuschleusen.

9. Maschine der Tabak verarbeitenden Industrie, welche als Herstellungsmaschine für stabförmige Produkte (5) der Tabak verarbeitenden Industrie ausgebildet ist, umfassend mindestens einen Queraxialförderer (74) zur queraxialen Förderung stabförmiger Produkte (50) der Tabak verarbeitenden Industrie, wenigstens eine zu dem mindestens einen Queraxialförderer (74) stirnseitig benachbart angeordnete Messvorrichtung (13), eine Maschinensteuerung (76) und eine dem mindestens einen Queraxialförderer in Förderrichtung (73) vorgeordnete Schneideinrichtung mit einem Schneidwerkzeug, wobei der Queraxialförderer (74) insbesondere als Trommel (71) oder Muldenband ausgebildet ist, **dadurch gekennzeichnet, dass** die Messvorrichtung (13) nach einem der Ansprüche 1 bis 7 ausgebildet ist und die Maschinensteuerung (76), der Queraxialförderer (74), die Messvorrichtung (13) und die Schneideinrichtung in elektrischer Wirkverbindung stehen, um im Falle einer anhand einer Auswertung der Messsignale der Sensoranordnung als fehlerhaft erkannten Schnittfläche an der Stirnfläche (51) des stabförmigen Produkts (50) einen Wechsel, ein Schärfen oder ein Nachführen des Schneidwerkzeugs auszulösen.

10. Maschine der Tabak verarbeitenden Industrie, welche als Herstellungsmaschine für Filterstäbe der Tabak verarbeitenden Industrie ausgebildet ist, umfassend mindestens einen Queraxialförderer (74) zur queraxialen Förderung eines Filterstabes, wenigstens eine zu dem mindestens einen Queraxialförderer (74) stirnseitig benachbart angeordnete Messvorrichtung (13), eine Maschinensteuerung (76) und eine dem mindestens einen Queraxialförderer in Förderrichtung (73) vorgeordnete regelbare Maschinenkomponente, insbesondere eine Reckwalzenanordnung und/oder eine Weichmacher-, Farb-, Faden- und/oder Granulatzuführeinrichtung, wobei der Queraxialförderer (74) insbesondere als Trommel (71) oder Muldenband ausgebildet ist, **dadurch gekennzeichnet, dass** die Messvorrichtung (13) nach einem der Ansprüche 1 bis 7 ausgebildet ist und die Maschinensteuerung (76), der Queraxialförderer (74), die Messvorrichtung (13) und die regelbare Maschinenkomponente in elektrischer Wirkverbindung stehen, um im Falle einer anhand einer Auswertung der Messsignale der Sensoranordnung als fehlerhaft erkannten Stirnfläche (51) des Filterstabes einen Korrekturwert für die regelbare Maschinenkomponente bereitzustellen.

11. Verfahren zur optischen Prüfung einer Stirnfläche (51) eines stabförmigen Produkts (50) an einer queraxial fördernden Maschine der Tabak verarbeitenden Industrie, umfassend: Aufnahme eines Bildes einer Stirnfläche (51) eines stabförmigen Produkts (50) und Auswertung des von der Sensoranordnung (13) ausgegebenen Messsignals, und dreidimensionale Vermessung des Oberflächenprofils der Stirnfläche (51) des stabförmigen Produkts (50), **gekennzeichnet durch** Erhalten eines dreidimensionalen Oberflächenprofils der Stirnfläche (51) des stabförmigen Produkts (50) aus dem von der Sensoranordnung (13) ausgegebenen Messsignal, und Auswerten des dreidimensionalen Oberflächenprofils der Stirnfläche (51) des stabförmigen Produkts (50)

12. Verfahren nach Anspruch 11 zur Bewertung einer Stirnfläche (51), insbesondere einer Schnittfläche, eines stabförmigen Produkts (50) der Tabak verarbeitenden Industrie, **gekennzeichnet durch** dreidimensionale Vermessung des Oberflächenprofils der gesamten Stirnfläche (51) des stabförmigen Produkts (50) mittels eines optischen Sensors (13), wobei mindestens eines aus der folgenden Gruppe von Kriterien auf der Grundlage des von dem Sensor (13) ausgegebenen Messsignals in einer elektronischen Signalverarbeitungseinrichtung ermittelt wird:
- Winkel α der Stirnfläche;
- positiver / negativer Überstand von Fasern (60) relativ zu der Stirnfläche;
- Größe und/oder Lage von Flächen verschiedener Farbe oder Grautöne in der Stirnfläche.

13. Verfahren nach Anspruch 12, **dadurch gekennzeichnet, dass** bei einer Abweichung des Winkels α der Stirnfläche (51) von vorzugsweise parametrisierbaren Grenzwerten ein Steuer- und/oder Fehlersignal generiert wird.

14. Verfahren nach Anspruch 12 oder 13, **dadurch gekennzeichnet, dass** für einzelne Kriterien jeweils ein vordefinierter Toleranzbereich betrachtet wird, in dem die Stirnfläche als "gut" bzw. "fehlerfrei" angesehen wird, wobei eine vorzugsweise parametrisierbare Obergrenze zₘₐₓ und eine vorzugsweise parametrisierbare Untergrenze zₘᵢₙ definierbar sind und wobei ein Steuer- und/oder Fehlersignal erzeugt wird, wenn der ermittelte Wert außerhalb des Toleranzbereiches liegt.

15. Verfahren nach einem der Ansprüche 12 bis 14 zur Durchführung in einer Maschine der Tabak verarbeitenden Industrie mit einer Schneideinrichtung, **dadurch gekennzeichnet, dass** im Falle einer anhand einer Auswertung der Messsignale der Sensoranordnung als fehlerhaft erkannten Schnittfläche an der Stirnfläche (51) des stabförmigen Produkts (50) ein Wechsel, ein Schärfen oder ein Nachführen eines Schneidwerkzeugs der Schneideinrichtung ausgelöst wird.

16. Verfahren nach einem der Ansprüche 12 bis 15 zur Durchführung in einer Herstellungsmaschine für Filterstäbe der Tabak verarbeitenden Industrie mit einer regelbaren Maschinenkomponente, insbesondere einer Reckwalzenanordnung und/oder einer Weichmacher-, Farb-, Faden- und/oder Granulatzuführeinrichtung, **dadurch gekennzeichnet, dass** im Falle einer anhand einer Auswertung der Messsignale der Sensoranordnung als fehlerhaft erkannten Stirnfläche (51) eines als Filterstab ausgebildeten stabförmigen Produkts ein Korrekturwert für die regelbare Maschinenkomponente bereitgestellt wird.

## Claims

1. Measuring device (10) for the optical examination of a front face (51) of a transversely conveyed rod-shaped product (50) of the tobacco processing industry, including an optical sensor arrangement (13) which is configured for recording an image of a front face (51) of a rod-shaped product (50), and an electronic signal processing device (24) for evaluating the measuring signal output by the sensor arrangement (13), wherein the sensor arrangement (13) is configured for 3-dimensional measurement of the surface profile of the front face (51) of the rod-shaped product (50), **characterized in that** the measuring device is configured for obtaining a 3-dimensional surface profile of the front face (51) of the rod-shaped product (50) from the measuring signal output by the sensor arrangement (13), and the electronic signal processing device (24) is configured for the evaluation of the 3-dimensional surface profile of the front face (51) of the rod-shaped product (50).

2. Device according to claim 1, **characterized in that** the sensor arrangement (13) includes a 3-dimensional sensor.

3. Device according to claim 2, **characterized in that** the 3-dimensional sensor is an imaging triangulation sensor or a 3-D-capable camera.

4. Device according to any one of the preceding claims, **characterized in that** the sensor arrangement includes a 2-dimensional sensor which is designed as a digital camera, in particular a color digital camera or an infrared digital camera.

5. Device according to any one of the preceding claims, **characterized in that** the sensor arrangement (13) includes an optical distance measurement sensor which is configured for scanning the front face (51) to be examined of the rod-shaped product (50).

6. Device according to claim 5, **characterized in that** the distance measurement sensor is a 2-dimensional optical distance measurement sensor, wherein the radiation source (15, 17) is configured for generating a radiation fan (18) to perform a linear scan (52) of the front face (51) of the rod-shaped product (50).

7. Device according to claim 6, **characterized in that** the extension b of the radiation fan (18) at the point of the front face (51) to be examined is larger than 10 mm.

8. Apparatus of the tobacco processing industry, including at least one transverse conveyor (74) for transversely conveying a product (50) of the tobacco processing industry, at least one measuring device (13) arranged adjacent to the front end of the at least one transverse conveyor (74), a machine control (76) and a discharging device which in the conveying direction (73) is arranged downstream the at least one transverse conveyor (74), wherein the transverse conveyor (74) is designed in particular as a drum (71), a through conveyor belt, a deep link conveyor chain or a chamber belt, **characterized in that** the measuring device (13) is designed according to one of the claims 1 to 7, and the machine control (76), the transverse conveyor (74), the measuring device (13) and the discharging device have an electric operative connection to discharge products which have been detected to be defective on the basis of an evaluation of the measuring signals of the sensor arrangement.

9. Apparatus of the tobacco processing industry which is designed as a manufacturing machine for rod-shaped products (5) of the tobacco processing industry, including at least one transverse conveyor (74) for transversely conveying rod-shaped products (50) of the tobacco processing industry, at least one measuring device (13) arranged adjacent to the front end of the at least one transverse conveyor (74), a machine control (76) and a cutting device comprising a cutting tool which in the conveying direction (73) is arranged upstream the at least one transverse conveyor, wherein the transverse conveyor (74) is designed in particular as a drum (71) or a through conveyor belt, **characterized in that** the measuring device (13) is designed according to one of the claims 1 to 7, and the machine control (76), the transverse conveyor (74), the measuring device (13) and the cutting device have an electric operative connection to initiate a replacement, a sharpening or a repositioning of the cutting tool in case a cut face on the front face (51) of the rod-shaped product (50) has been detected to be defective on the basis of an evaluation of the measuring signals of the sensor arrangement.

10. Apparatus of the tobacco processing industry which is designed as a manufacturing machine for filter rods of the tobacco processing industry, including at least one transverse conveyor (74) for transversely conveying a filter rod, at least one measuring device (13) arranged adjacent to the front end of the at least one transverse conveyor (74), a machine control (76) and a controllable machine component which in the conveying direction (73) is arranged upstream the at least one transverse conveyor, in particular a forging roll arrangement and/or a softening agent, color, filament and/or granulate material feeding device, wherein the transverse conveyor (74) is designed in particular as a drum (71) or a through conveyor belt, **characterized in that** the measuring device (13) is designed according to one of the claims 1 to 7, and the machine control (76), the transverse conveyor (74), the measuring device (13) and the controllable machine component have an electric operative connection to provide a correction value for the controllable machine component in case a front face (51) of the filter rod has been detected to be defective on the basis of an evaluation of the measuring signals of the sensor arrangement.

11. Method for the optical examination of a front face (51) of a rod-shaped product (50) at a transversely conveying apparatus of the tobacco processing industry, including:
recording an image of a front face (51) of a rod-shaped product (50) and evaluating the measuring signal output by the sensor arrangement (13), and 3-dimensional measurement of the surface profile of the front face (51) of the rod-shaped product (50), **characterized by** obtaining a 3-dimensional surface profile of the front face (51) of the rod-shaped product (50) from the measuring signal output by the sensor arrangement (13), and evaluating the 3-dimensional surface profile of the front face (51) of the rod-shaped product (50).

12. Method according to claim 11 for the assessment of a front face (51), in particular a cut face of a rod-shaped product (50) of the tobacco processing industry, **characterized by** 3-dimensional measurement of the surface profile of the whole front face (51) of the rod-shaped product (50) by an optical sensor (13), wherein at least one criterion of the following group of criteria is identified in an electronic signal processing device on the basis of the measuring signal output by the sensor (13):
- angle α of the front face;
- positive / negative excess length of fibres (60) relative to the front face;
- size and/or position of areas with different colors or shades of grey in the front face.

13. Method according to claim 12, **characterized in that** a control signal and/or an error signal is generated if the angle α of the front face (51) deviates from preferably parameterizable threshold values.

14. Method according to claim 12 or 13, **characterized in that** a predefined tolerance range is considered for each individual criterion in which the front face is regarded as "good" or "defect-free", wherein a preferably parameterizable upper limit zₘₐₓ and a preferably parameterizable lower limit zₘᵢₙ can be defined and wherein a control signal and/or an error signal is generated if the determined value lies beyond the tolerance range.

15. Method according to one of the claims 12 to 14 for being carried out in an apparatus of the tobacco processing industry comprising a cutting device, **characterized in that** a replacement, a sharpening or a repositioning of a cutting tool of the cutting device is initiated in case a cut face on the front face (51) of the rod-shaped product (50) has been detected to be defective on the basis of an evaluation of the measuring signals of the sensor arrangement.

16. Method according to one of the claims 12 to 15 for being carried out in a manufacturing machine for filter rods of the tobacco processing industry comprising a controllable machine component, in particular a forging roll arrangement and/or a softening agent, color, filament and/or granulate material feeding device, **characterized in that** a correction value is provided for the controllable machine component in case a front face (51) of a rod-shaped product designed as a filter rod has been detected to be defective on the basis of an evaluation of the measuring signals of the sensor arrangement.

## Revendications

1. Dispositif de mesure (10) destiné au contrôle optique d'une surface frontale (51) d'un produit en forme de tige (50) de l'industrie de traitement du tabac acheminé dans le sens transversal-axial, comprenant un ensemble capteur optique (13), qui est configuré pour la photographie d'une surface frontale (51) d'un produit en forme de tige (50), et un moyen de traitement de signal électronique (24) destiné à exploiter le signal de mesure émis par l'ensemble capteur (13), l'ensemble capteur (13) étant configuré pour la mesure tridimensionnelle du profil de surface de la surface frontale (51) du produit en forme de tige (50), **caractérisé en ce que** le dispositif de mesure est configuré pour obtenir un profil de surface tridimensionnel de la surface frontale (51) du produit en forme de tige (50) à partir du signal de mesure émis par l'ensemble capteur (13), et le moyen de traitement de signal électronique (24) est configuré pour l'exploitation du profil de surface tridimensionnel de la surface frontale (51) du produit en forme de tige (50).

2. Dispositif selon la revendication 1, **caractérisé en ce que** l'ensemble capteur (13) comprend un capteur 3D.

3. Dispositif selon la revendication 2, **caractérisé en ce que** le capteur 3D est un capteur d'imagerie à triangulation ou un appareil photographique à capacité 3D.

4. Dispositif selon l'une des revendications précédentes, **caractérisé en ce que** l'ensemble capteur comprend un capteur 2D, qui est réalisé sous la forme d'un appareil photographique numérique, en particulier d'un appareil photographique numérique couleurs ou d'un appareil photographique numérique infrarouge.

5. Dispositif selon l'une des revendications précédentes, **caractérisé en ce que** l'ensemble capteur (13) comprend un capteur optique de mesure de déplacement, qui est configuré pour balayer la surface frontale (51) à examiner du produit en forme de tige (50).

6. Dispositif selon la revendication 5, **caractérisé en ce que** le capteur de mesure de déplacement est un capteur optique de mesure de déplacement bidimensionnelle, la source de rayonnement (15, 17) étant configurée pour générer un éventail de rayonnement (18) afin d'effectuer un balayage (52) linéaire de la surface frontale (51) du produit en forme de tige (50).

7. Dispositif selon la revendication 6, **caractérisé en ce que** l'étendue b de l'éventail de rayonnement (18) à l'emplacement de la surface frontale (51) à examiner est supérieure à 10 mm.

8. Machine de l'industrie de traitement du tabac, comprenant au moins un convoyeur transversal-axial (74) destiné à acheminer dans le sens transversal-axial un produit (50) de l'industrie de traitement du tabac, au moins un dispositif de mesure (13) disposé adjacent côté frontal à l'au moins un convoyeur transversal-axial (74), une commande de machine (76) et un moyen d'extraction en aval de l'au moins un convoyeur transversal-axial (74) dans le sens de transport (73), le convoyeur transversal-axial (74) étant réalisé en particulier sous la forme d'un tambour (71), d'un convoyeur en auge, d'une chaîne à raclettes ou d'une bande à compartiments, **caractérisé en ce que** le dispositif de mesure (13) est réalisé selon l'une des revendications 1 à 7 et la commande de machine (76), le convoyeur transversal-axial (74), le dispositif de mesure (13) et le moyen d'extraction coopèrent électriquement pour extraire des produits identifiés comme défectueux à l'aide d'une exploitation des signaux de mesure de l'ensemble capteur.

9. Machine de l'industrie de traitement du tabac, qui est réalisée sous la forme d'une machine de fabrication pour produits en forme de tige (5) de l'industrie de traitement du tabac, comprenant au moins un convoyeur transversal-axial (74) destiné à acheminer dans le sens transversal-axial des produits en forme de tige (50) de l'industrie de traitement du tabac, au moins un dispositif de mesure (13) disposé adjacent côté frontal à l'au moins un convoyeur transversal-axial (74), une commande de machine (76) et un moyen de coupe, comprenant un outil de coupe, en amont de l'au moins un convoyeur transversal-axial dans le sens de transport (73), le convoyeur transversal-axial (74) étant réalisé en particulier sous la forme d'un tambour (71) ou d'un convoyeur en auge, **caractérisé en ce que** le dispositif de mesure (13) est réalisé selon l'une des revendications 1 à 7 et la commande de machine (76), le convoyeur transversal-axial (74), le dispositif de mesure (13) et le moyen de coupe coopèrent électriquement pour, si une surface de coupe sur la surface frontale (51) du produit en forme de tige (50) est identifiée comme défectueuse à l'aide d'une exploitation des signaux de mesure de l'ensemble capteur, déclencher un changement, un aiguisage ou un ajustement de l'outil de coupe.

10. Machine de l'industrie de traitement du tabac, qui est réalisée sous la forme d'une machine de fabrication pour tiges de filtre de l'industrie de traitement du tabac, comprenant au moins un convoyeur transversal-axial (74) destiné à acheminer dans le sens transversal-axial une tige de filtre, au moins un dispositif de mesure (13) disposé adjacent côté frontal à l'au moins un convoyeur transversal-axial (74), une commande de machine (76) et un composant de machine réglable en amont de l'au moins un convoyeur transversal-axial dans le sens de transport (73), en particulier un agencement de cylindres étireurs et/ou un moyen d'alimentation d'assouplissant, de couleur, de fils et/ou de granulés, le convoyeur transversal-axial (74) étant réalisé en particulier sous la forme d'un tambour (71) ou d'un convoyeur en auge, **caractérisé en ce que** le dispositif de mesure (13) est réalisé selon l'une des revendications 1 à 7 et la commande de machine (76), le convoyeur transversal-axial (74), le dispositif de mesure (13) et le composant de machine réglable coopèrent électriquement pour, si une surface frontale (51) de la tige de filtre est identifiée comme défectueuse à l'aide d'une exploitation des signaux de mesure de l'ensemble capteur, fournir une valeur de correction pour le composant de machine réglable.

11. Procédé de contrôle optique d'une surface frontale (51) d'un produit en forme de tige (50) sur une machine à acheminement transversal-axial de l'industrie de traitement du tabac, comprenant : la photographie d'une surface frontale (51) d'un produit en forme de tige (50) et l'exploitation du signal de mesure émis par l'ensemble capteur (13), et la mesure tridimensionnelle du profil de surface de la surface frontale (51) du produit en forme de tige (50), **caractérisé par** l'obtention d'un profil de surface tridimensionnel de la surface frontale (51) du produit en forme de tige (50) à partir du signal de mesure émis par l'ensemble capteur (13), et l'exploitation du profil de surface tridimensionnel de la surface frontale (51) du produit en forme de tige (50).

12. Procédé selon la revendication 11, destiné à l'évaluation d'une surface frontale (51), en particulier d'une surface de coupe, d'un produit en forme de tige (50) de l'industrie de traitement du tabac, **caractérisé par** la mesure tridimensionnelle du profil de surface de l'ensemble de la surface frontale (51) du produit en forme de tige (50) au moyen d'un capteur optique (13), au moins un critère du groupe de critères suivant étant déterminé sur la base du signal de mesure émis par le capteur (13) dans un moyen de traitement de signal électronique :
- angle α de la surface frontale ;
- dépassement positif/négatif de fibres (60) par rapport à la surface frontale ;
- dimension et/ou position de surfaces de couleurs ou de niveaux de gris différents dans la surface frontale.

13. Procédé selon la revendication 12, **caractérisé en ce que**, en cas d'écart entre l'angle α de la surface frontale (51) et des valeurs limites de préférence paramétrables, un signal de commande et/ou d'erreur est généré.

14. Procédé selon la revendication 12 ou 13, **caractérisé en ce que**, pour des critères individuels, respectivement une plage de tolérance prédéfinie est prise en compte, dans laquelle la surface frontale est considérée comme « bonne » ou « sans erreur », une limite supérieure zₘₐₓ de préférence paramétrable et une limite inférieure zₘᵢₙ de préférence paramétrable pouvant être définies et un signal de commande et/ou d'erreur étant généré quand la valeur déterminée se trouve hors de la plage de tolérance.

15. Procédé selon l'une des revendications 12 à 14, destiné à être exécuté dans une machine de l'industrie de traitement du tabac comprenant un moyen de coupe, **caractérisé en ce que**, si une surface de coupe sur la surface frontale (51) du produit en forme de tige (50) est identifiée comme défectueuse à l'aide d'une exploitation des signaux de mesure de l'ensemble capteur, un changement, un aiguisage ou un ajustement d'un outil de coupe du moyen de coupe est déclenché.

16. Procédé selon l'une des revendications 12 à 15, destiné à être exécuté dans une machine de fabrication pour tiges de filtre de l'industrie de traitement du tabac, comprenant un composant de machine réglable, en particulier un agencement de cylindres étireurs et/ou un moyen d'alimentation d'assouplissant, de couleur, de fils et/ou de granulés, **caractérisé en ce que**, si une surface frontale (51) d'un produit en forme de tige réalisé sous la forme d'une tige de filtre est identifiée comme défectueuse à l'aide d'une exploitation des signaux de mesure de l'ensemble capteur, une valeur de correction est fournie pour le composant de machine réglable.
